(19) Europäisches Patentamt
European Patent Office
Office européen des brevets

(11) **EP 4 664 151 A1**

(12) **EUROPEAN PATENT APPLICATION**

(43) Date of publication:
**17.12.2025 Bulletin 2025/51**

(21) Application number: **24305913.6**

(22) Date of filing: **10.06.2024**

(51) International Patent Classification (IPC):
**G01S 7/481** (2006.01)     **G01S 7/4913** (2020.01)
**G01S 7/493** (2006.01)

(52) Cooperative Patent Classification (CPC):
**G01S 7/4815; G01S 7/4816; G01S 7/4913;
G01S 7/493**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Commissariat à l'Energie Atomique et
aux Energies
Alternatives
75015 Paris (FR)**

(72) Inventors:
• **PELISSIER, Michael
38054 GRENOBLE CEDEX 09 (FR)**
• **DE MARTINO, Paolo
38054 GRENOBLE CEDEX 09 (FR)**
• **DUPRET, Antoine
38054 GRENOBLE CEDEX 09 (FR)**
• **ANDRE, Luc
38054 GRENOBLE CEDEX 09 (FR)**
• **ALIANE, Abdelkader
38054 GRENOBLE CEDEX 09 (FR)**

(74) Representative: **Atout PI Laplace
Immeuble Up On
25 Boulevard Romain Rolland
CS 40072
75685 Paris Cedex 14 (FR)**

(54) **OPTOELECTRONIC SYSTEM WITH REDUCED CROSSTALK BETWEEN A PLURALITY OF LIGHT SOURCES**

(57) The invention concerns an optoelectronic system (OS) comprising:
- a plurality of incoherent light sources (LS);
- at least one photodetector (PD) configured for generating a detection signal when illuminated by light emitted by at least one of said incoherent light sources;
- a driving circuit configured for supplying said incoherent light sources with respective driving signals;
- at least one processing circuit associated to said or each said photodetector for processing said detection signal; characterized in that:
- said driving circuit is configured for supplying said incoherent light sources with respective driving signals comprising an AC component, wherein the AC components of different driving signals have different frequencies and/or are encoded with different orthogonal or near-orthogonal binary codes; and in that
- said or each said processing circuit is configured for demodulating and/or decoding the detection signal in order to extract a contribution to said detection signal originated by illumination of the photodetector by light emitted by a predetermined one of said incoherent light sources.

FIG.2

## Description

### TECHNICAL FIELD

The present invention relates to an optoelectronic system comprising a plurality of light sources and at least a light detector and a method of operating the same. It applies in particular, but not exclusively, to multifunctional displays

### BACKGROUND

Smartphones, laptops, and other electronic devices have become integral parts of our lives. Although the display features tailored to provide digital content to the end-user remain paramount, over the last few years, devices have evolved to include more sensors that enhance the user's experience and security. Sensing functions include touch, fingerprint, proximity sensing, light sensing, 3D sensing (face, gesture recognition), eye tracking, temperature sensing, health sensing (heart rate, blood oxygen, temperature, and vein imaging), lensless cameras, antennas, and even micro-piezo elements for integrated speakers or pressure sensing.

Currently, most of the sensing architecture is made of many discrete components that are located around consumer devices, preventing the display from covering the full smartphone surface. Originally positioned outside the display, sensors - and particularly light sensors - have progressively been embedded in the display real estate because of progress in technologies for display cutouts and punch-holes. Ideally, sensors would become invisible. Recently, some of these peripheral devices, such as the visible camera, fingerprint, and face ID, have been moved from the edge to under the display for the sake of compactness and larger screen. This engenders difficulties, as the display must allow an additional optical signal to cross through it, ultimately affecting image quality. An alternative option consists in integrating sensors within the display, directly onto the front plane panel. This solution enables to shrink the total consumer device thickness further in order to reach device needs to be ultra-thin and bendable, flexible, stretchable, or transparent.

In existing OLED and LCD displays, the pixel area is covered almost fully by the electrooptical elements to provide enough luminance. Whereas in microLED displays, the light source is more powerful. Therefore, only a limited emitted surface is required and only a small part of the total pixel area is exploited providing free space in order to integrate for instance multiple optical light.

However, optical crosstalk remains a well-known challenge in devices comprising multiple light sources in close vicinity to - or otherwise optically coupled with - light detectors. Such a situation arises, in particular, in the case of multi-functional displays formed by arrays of pixels at least some of which comprise, in addition to visible light sources (usually red, green and blue subpixel) at least a photodetector, and possibly an light source. Decreasing the pixel dimensions and mutual distance to provide better resolution compounds the cross-talk issues.

Optical crosstalk is induced by photon penetration to neighboring pixels.

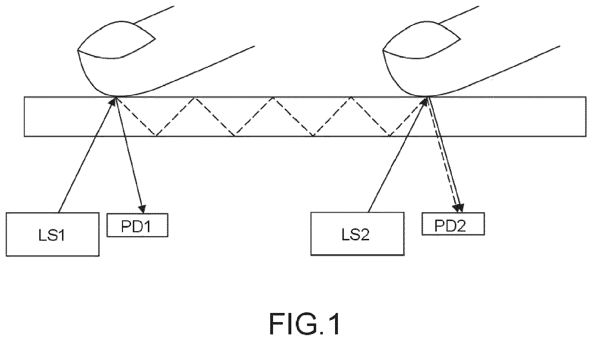

When multiple high-powered sources are combined with sensors in a tight spacing area, crosstalk between a given sensor and the nearby source supposed to illuminate another location of the device may appear. Figure 1 illustrates the crosstalk phenomenon between a light source and a nearby photodetector in a device using for instance a fingerprint on display. In this configuration, an infrared light source LS2 is supposed to illuminate a finger sensor n°2 after reflection onto the object (finger) O and the resulting reflected light should be received by a photodetector PD2. However, because of lack of sufficient light isolation and/or wave-guiding issues in the cover display, light coming from another infrared light source LS1 may also be coupled to PD2. A as result, the photodetector PD2 receives the useful and informative signal coming from the source LS2 after reflection on the object but also a parasitic signal coming from the source LS1.

Different solutions exist to limit the effect of crosstalk.

A first solution consists of blocking undesired light beams using light blocking elements such as pinholes, masks or walls.

For example, *in* M. A. B. Misran and R. Hattori, "Crosstalk and Uniformity Analysis of Fingerprint- On-Display Technology using Pinhole Imaging Technique," presented at 2022 29th International Workshop on Active-Matrix Flatpanel Displays and Devices (AM-FPD), 2022, a pinhole is used. The fingerprint reading process is started by illuminating the fingerprint surface using typically OLEDs from the display sources. Then, the reflected light from the fingerprint surface will go through the pinholes. Next, the optical path differences underneath the OLEDs layer will read the passing-through lights. For each of the pinholes, a certain size of the local image is used in the final stitched fingerprint. This corresponds to a certain imaging angle of the pinhole, which is normally around 10-20 degrees depending on pinhole array pitch and module thickness. The overlapped light intensity distribution from different pinholes and between neighboring optical path differences is responsible for optical crosstalk. This optical crosstalk will provide false information during the biometric recognition process, which will reduce the reliability of this system. More precisely, because the distance between the finger and the sensor is large during optical fingerprint recognition because of the thickness of cover layer, the sensor may simultaneously receive multiple ridge and/or valley reflected light due to scattering of light reflected by the finger, resulting in inaccuracy of fingerprint information identified based on the light received by the sensor. One of the techniques to reduce this optical crosstalk is by reducing the sensor pixel's size while keeping the standard resolution of 50 um. Geometrically, the pinhole should be as small as possible to increase sharpness and resolution of the image. Conversely, as it gets smaller, the propagated light through the pinhole will cause spreading due to diffraction. Thus, the pinhole geometry and diffraction must be adjusted to limit the crosstalk and improve the system.

Therefore, this solution to reduce crosstalk, as well as masks and wall, presents geometrical limitations which limit the flexibility of device designs and which, in turn induce fabrication limitations.

Another solution to reduce crosstalk is to use microlenses to collimate light beams. For example, in CN206058223 discloses a microlens arranged on a surface of a light detecting element to allow only light reflected by an object in a specific direction to project on the light detecting element. However, the proposed microlens degrades the image quality and a view angle of the light detector, therefore increasing a thickness of the sensing device due to its complicated structure, and increasing its cost.

A third solution is to use time domain synchronization between a sensor and a display element.

For example, in K. J. Vampola, G. Shao, W. S. A. Rieutort-Louis, M. Xu, M. Chappalli, and A. J. Roudbari, "12-1: Through-OLED Display Ambient Color Sensing," SID Symposium Digest of Technical Papers, vol. 53, pp. 117-120, 2022, time domain synchronization between a sensor and a display element is used. Typical OLED displays are driven with periodic momentary emission blanking periods. In K. J. Vampola, G. Shao, W. S. A. Rieutort-Louis, M. Xu, M. Chappalli, and A. J. Roudbari, "12-1: Through-OLED Display Ambient Color Sensing," SID Symposium Digest of Technical Papers, vol. 53, pp. 117-120, 2022., the author designed an ambient light sensor solution which is capable of fast sensing within short windows (typically 150 $\mu$s) so that it can be synchronized to the OLED display emission blanking. The ambient light sensor takes a reading more than ten times faster than prior generations of ambient light sensors.

However, because of the OLED optical emission decay that may last for hundreds of microseconds, the cross-talk emission is reduced in the range of 8-10 dB but not entirely eliminated. Additionally, this solution requires accurate time synchronization over all the components and may alter the quality of the display itself because of the limited period of activation time.

The proposed invention overcomes the limitations recited above.

## BRIEF SUMMARY OF THE INVENTION

The invention proposes a solution for a photodetector in presence of plurality of light source in close vicinity, or otherwise coupled to it, to be capable of distinguishing the light sources from one to the other and so on to be immune to crosstalk phenomena. This invention is particularly suited to multi-functional display because in such device i) light sources are gathered in a tight space with sensors ii) the number of light sources and light sensors may possibly be large, increasing the probability of cross talk iii) the technology assembly may be responsible for wave-guiding responsible for significant cross-talk (typically a cover display).

The main principle of the invention is to create a unique signature of each source such that when a given photodetector collect light, it is able to detect the origin of the light thanks to the unique source signature. This signature is performed by modulating the light source either in frequency domain and/or by encoding the signal in time with orthogonal code sequences before any emission. Stating the fact that the photodetector is supposed to know the unique signature of the source from which it is supposed to receive light, because of the orthogonality either in frequency or code domain, the photodetector is able to focus of the source of interest and reject any other light sources seen as parasitic signal.

The propose inventions overcomes the fabrication, cost, design limitations (for instance the thickness of a panel) required by light blocking elements and microlenses. Additionally, the invention does not require any accurate time domain synchronization solution. The solution does not alter the display image quality because it does not require any physical element on top of the display element. At last, it does not limit the view angle of the light detector so as to improve its sensitivity.

## BRIEF DESCRIPTION OF THE DRAWINGS

Embodiments of the invention will now be described with reference to the accompanying drawings, in which:

Fig. 1 represents an illustration of the crosstalk phenomenon between two light sources and two photodiodes in an application dedicating to finger analysis;

Fig. 2 represents an optoelectronic system, according to the invention;

Fig. 3 represents an example of pixel of a display;

Fig. 4 illustrates an embodiment of the invention for light emission exploiting frequency modulation diversity to reduce crosstalk;

Fig. 5a represents a block diagram for light reception exploiting using a photodetector and associated circuits to perform frequency selection relying on first bandpass filtering and down-conversion;

Fig. 5b represents a frequency domain illustration of block diagram detailed on fig 5a

Fig. 6a represents a block diagram for light reception of an embodiment of the invention using a photodetector and associated circuits to perform frequency selection relying on down-conversion then low-pass filtering;

Fig. 6b represents a frequency domain illustration at the photodetector side of block diagram detailed on fig 6a

Fig 7a: illustrates an embodiment of the invention for light emission exploiting frequency modulation AND encoding to reduce crosstalk and the related spectrum;

Fig. 7b represents a frequency domain illustration at the light emitter side of block diagram detailed in figure 7a

Fig. 7c represents a chronogram of a modulation signal, a code sequence, a modulatedencoded signal and an encoded local oscillator used in figure 7a

Fig. 8 represents a block diagram for light reception using one specific heterodyne photodetector associated with code sequence decoding;

Fig. 9 represents an embodiment for light reception of the invention using an analog circuit implementation based on switch capacitor circuit implementation performing photonic mixer devices;

Fig. 10 represents embodiment for light reception of the invention using a digital implementation of signal processing;

Fig. 11a represents a block diagram for light reception of an embodiment of the invention using a circuit for performing demodulation;

Fig. 11b represents chronograms of demodulations of an embodiment of the invention;

Fig. 12a represents an example of a block diagram for light reception of a embodiment of the invention using a circuit for controlling the polarity of capacitance, with a capacitance switch position when code is set to +1;

Fig. 12b represents a block diagram of an exemplary embodiment of the invention using a circuit for controlling the polarity of capacitance, with a capacitance switch position when code is set to -1;

Fig 12c represents chronograms of demodulations of the exemplary embodiment of the invention;

Fig. 13a and Fig. 13 represent simulation results of an embodiment of the invention where both frequency modulation diversity and encoding are used;

Fig. 14a and Fig. 14b represent simulation results of an example not according to the invention where neither frequency modulation nor encoding is used;

Fig. 15a and Fig. 15b represent simulation results of an embodiment of the invention where subcarrier encoding is used without frequency modulation diversity;

Fig. 16a and Fig. 16b represents simulation results of an embodiment of the invention where baseband encoding is used, without frequency modulation;

Fig. 17 represents a flow diagram of a method of operating an optoelectronic system, according to the invention.

## DETAILED DESCRIPTION

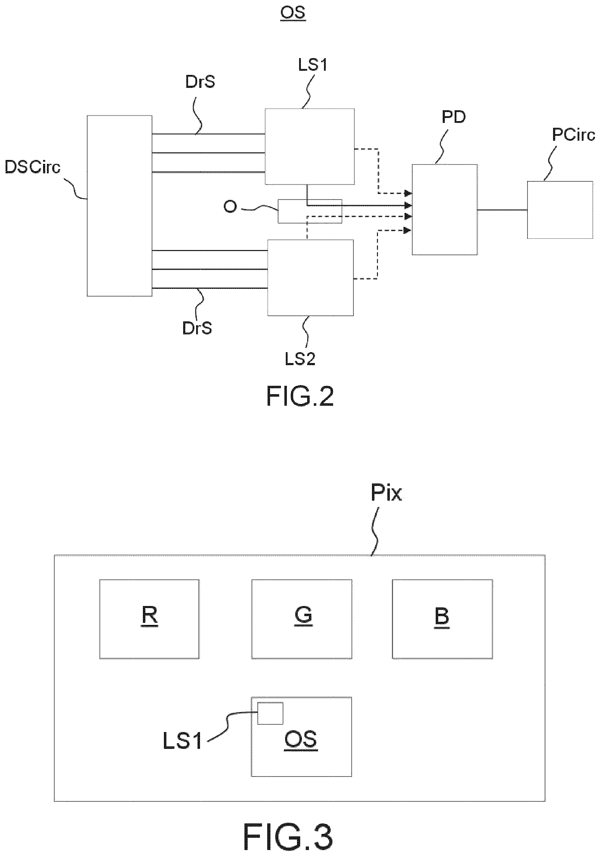

The invention concerns an optoelectronic system OS in which it is possible to distinguish light sources from one to the other. Figure 2 illustrates an optoelectronic system OS according to the invention. The optoelectronic system OS may be part of a pixel of a device comprising multiple pixels, otherwise stated, some or all of the pixels of the device may comprise an optoelectronic system OS according to the invention.

The optoelectronic system OS comprises a plurality of incoherent light sources LS1, LS2. For example, the light sources LS1, LS2 may be light emitting diodes (LED), For example, at least certain pixels include - in addition to three sub-pixels R, G and B - an additional incoherent light source and/or a sensor.

Further, the optoelectronic system OS comprises at least one photodetector PD configured for generating a detection signal DS when collected light emitted by at least one of the incoherent light sources and a reflection from an object O. The photodetector PD may be a photodiode that recovers the variations of the optical power generated by the light sources LS1, LS2 and backscattered by the object, and converts it into current intensity.

Further, the optoelectronic system OS comprises a driving circuit DrCirc configured for supplying the incoherent light sources with respective driving signals DrS. The driving circuit DrCirc is configured for supplying the incoherent light sources LS1, LS2 with respective driving signals DrS comprising an AC component, wherein the AC components of different driving signals DrS have different frequencies and/or are encoded with different orthogonal or near-orthogonal binary codes. The driving signals DrS may also have a DC component superimposed to the AC component. It is noted that that frequency and code multiplexing techniques are known in optical telecommunications, but in a context of coherent light, and therefore of coherent light detection exploiting optical mixing. In contrast, in the present invention, incoherent light is used, and direct light detection is exploited with classical photodetector performing non coherent light intensity detection.

Further, the optoelectronic system OS comprises at least one processing circuit Pcirc associated to the photodetector, or each photodetector, for processing the detection signal, i.e. the electrical signal generated by the photodetector impinged by the detected optical signal. The processing circuit PCirc is configured for demodulating and/or decoding the detection signal in order to extract a contribution to the detection signal originated by illumination of the photodetector PD by light emitted by a predetermined one of the incoherent light sources LS1, LS2 (e.g., in this exemple, LS1). The predetermined incoherent light source LS1 is chosen with the position and/or the direction of the light towards the photodetector. For example, the predetermined light source LS1 is the closest to the photodetector PD and/or aiming at the photodetector.

In an example, the photodetector PD (or each photodetector if the optoelectronic system OS comprises multiple photodetectors) is configured for collecting reflected light by the object O and coming primarily from the predetermined light source LS1, while also receiving stray light or any reflected light from at least one other incoherent light source of the plurality of incoherent light sources LS2. In particular, the light beam of the predetermined light source LS1 is configured for illuminating a corresponding photodetector PD after reflection by the object O. The other incoherent light source(s) LS2 may only illuminate the photodetector PD because of the effect of crosstalk, and therefore not intentionally illuminate the photodetector PD.

Photodetector PD is a "power" photodetector, i.e. a photodetector generating a signal depending on the power of the light impinging on it. Otherwise stated, it is a detector configured for performing incoherent detection.

Even if reference is made to incoherent light sources, the invention also applies to the case of coherent light sources, provided that detection is performed incoherently, i.e. using a power photodetector.

In an example, the optoelectronic system OS is part of a multifunctional display comprising a plurality of pixels, at a pixel comprising one incoherent light sources and at least one pixel also comprising the or one photodetector, the processing circuit PCirc associated to the photodetector, or each photodetector, being configured for extracting the contribution to the detection signal originated by illumination of the photodetector PD by light emitted by the incoherent light source belonging to the same pixel as the photodetector. For example, the optoelectronic system OS may be part of a smartphone, a laptop, a display or any other electronic device. For example, the optoelectronic system OS may be part of an electronic device comprising a micro-LED display. For example, each pixel may be a light emitting element such as a micro-LED. Each pixel may comprise a light source and a photodetector. In a multifunctional display, many pixels are arranged next to each other. Therefore, each pixel receives parasitic light from other light sources arranged on nearby pixels due to crosstalk. That is why photodetectors from a pixel may be configured detect only light received from light sources on the same pixel. Figure 3 represents an example of a pixel Pix of a display. The pixel comprises the R, G, B light sources and the optoelectronic system OS. The optoelectronic system OS comprises at least one light source LS which can e.g. be an infrared source. Other pixels of the display may, for instance, comprise only RGB light sources.

It is noted that, in the present invention, the effect of crosstalk in systems comprising light sources and a sensors in the close vicinity are mitigated by either using different frequencies applied to the driving signals DrS or encoding the driving signals DrS or both. In the following, examples of system OS using only frequency modulations, only encoding and both frequency modulations and encoding are described.

When different frequencies are applied to the driving signals DrS, the driving circuit Drcirc may be configured for supplying the incoherent light sources LS1, LS2 with respective driving signals DrS which have AC components at different frequencies and wherein the processing circuit PrCirc, or each processing circuit PrCirc, comprises: a local oscillator LO

configured for generating a local oscillator signal at one of the frequencies; and a demodulator configured for receiving as inputs the photodetector signal and the local oscillator signal and for providing as an output the contribution to the detection signal.

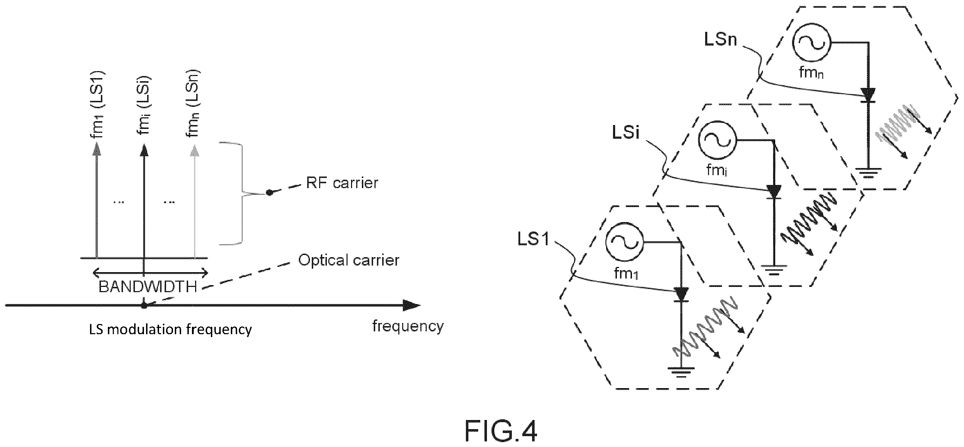

In an example, as illustrated in Figure 4 representing multiplexing in frequency domain (left hand side) and incoherent light sources (right hand side), the driving circuit DrCirc is configured for supplying the incoherent light sources with respective driving signals comprising an AC component, wherein the AC components of different driving signals have different frequencies. For example, three incoherent light sources ($LS_1$, $LS_i$, ..., $LS_n$) are used, which are infrared LEDs. A sinusoidal signal is modulating the light intensity of each LED. More precisely, the driving signal of the source i is composed of a DC component and an AC component at a given frequency fmi, called the carrier for i=1... n. As a result, the light source intensity is modulated with a sinusoidal component. The frequency of the modulated signal should be selected within the frequency bandwidth of the LED in order to perform an effective light modulation and within the frequency bandwidth of the photodetector PD to ensure an effective light detection. When several sources are considered in a same display, a different frequency is allocated to each source so that the light is modulated in specific manner from one source to the other. For example, depending on LED/PD technology the light may be modulated from Hz up to GHz range.

When the driving circuit DrCirc is configured for supplying the incoherent light sources with respective driving signals DrS comprising an AC component having different frequencies, the processing circuit PCirc is configured for demodulating the detection signal in order to extract a contribution to the detection signal.

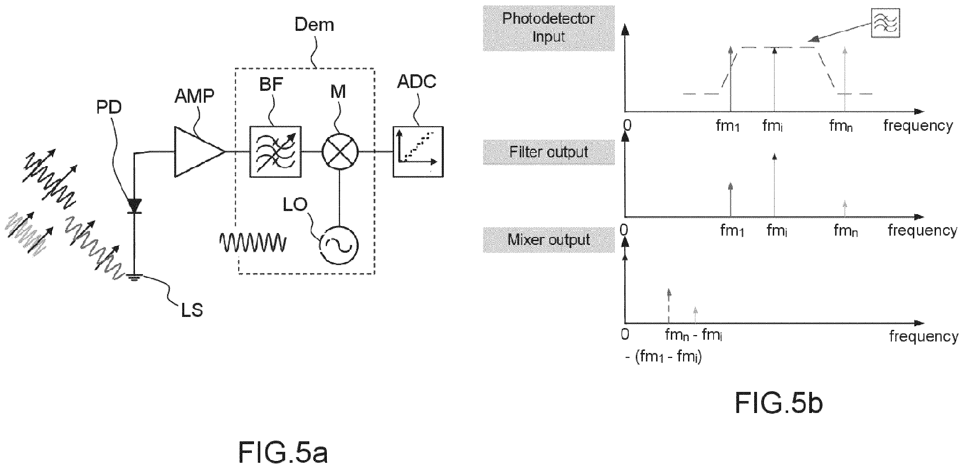

When the light sources LS1, LSi, ... , LSn are modulated, as in the example shown in Figure 4, the processing unit is configured to demodulate the detection signal. An example of signal demodulation is shown in figure 5a illustrating a block diagram of the photodetector PD and the associated circuits to perform this frequency selection and figure 5b illustrating the representation in frequency domain of the filtering and down-conversion process.

In this example, the demodulator Dem comprises: a band-pass filter BP having a pass-band centered on the frequency of the AC component of the driving signal fed to a predetermined one of the incoherent light sources; and a mixer M configured for down-converting the AC by mixing it with the local oscillator signal, generated by local oscillator LO, in order to convert it to baseband.

In this example, the detection is accomplished typically by a photodiode PD that recovers the variations of the optical power and converts into current intensity. The photodiode PD converts the optical signal on a specific wavelength ranging from UV/VIS up to IR range into an electrical domain. If the photodetector PD is collecting backscattering from the object O coming from a single light source, for example, source LSi modulated at the frequency fmi, the electrical signal is modulated at the same frequency. However, in the present invention, when several light sources are used, crosstalk may appear. In presence of crosstalk, the photodetector PD is affected by indirect and direct path of the multiple light sources, each having an intensity which is modulated with a specific carrier frequency. Therefore, the photodetector PD performs frequency selection so that only relevant information coming from one given light source (for example source LSi), modulated at the frequency fmi is considered. After amplification using an amplifier Amp, (for example a trans-impedance amplifier), the signal is filtered using a bandpass filter BF. Further, the signal is down-converted by mixing the received signal with a local oscillator frequency fmi tuned to the modulation frequency of interest. The mixing process can be performed with the local oscillator in phase (I) or in phase and in quadrature (I/Q) so as to perform either real or complex downconversion. The signal of interest is then down-converted to base-band so that a low frequency analog digital converter ADC can sample the signal and recover the useful information relating to the light intensity fluctuation.

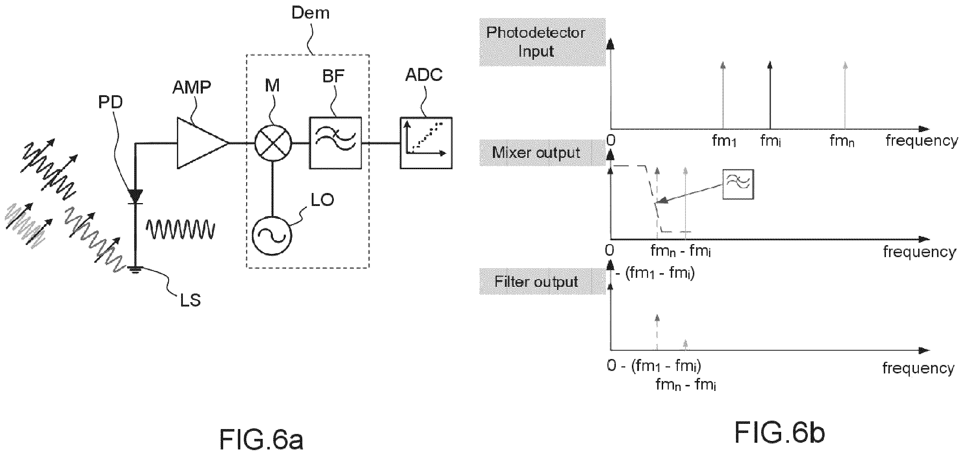

Another example of signal demodulation is shown in Figures 6a and 6b. This example is similar to the one shown in Figures 5a and 5b except that a low pass filter is used instead of a bandpass filter BF, and that the low pass filter is placed after the mixer instead of before the mixer. Also in this example, frequency mixing may be done in a complex manner (I/Q).

In this example, the demodulator comprises a mixer (M) configured for down-converting an AC component of the detection signal by mixing it with the local oscillator signal; and a low-pass filter (LF), configured for filtering the down-converted AC-component of the detection signal.

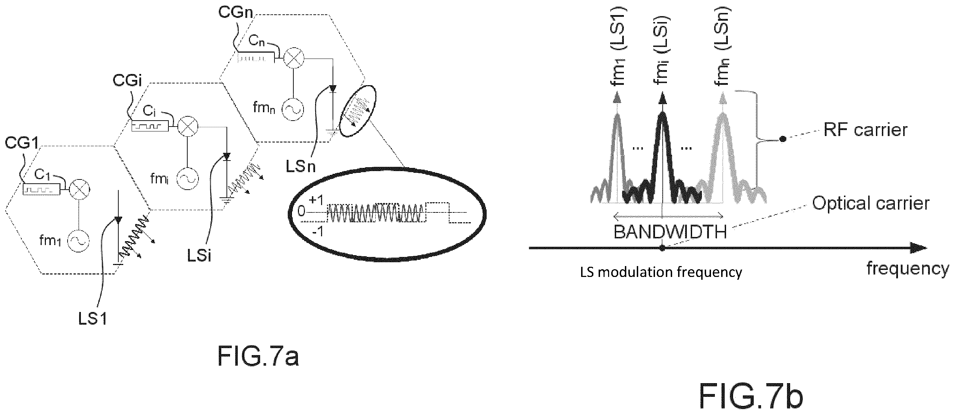

In this example, again, the light from a source LSi is modulated. The filtering process of the crosstalk signal reaching the photodetector PD from near light sources LS is done with a low pass filtering. The down-conversion is performed before the filtering. The advantage of this feature relies on the fact that the filter does not require to be tuned to the desired frequency fmi, therefore relaxing filter constraints. However, the linearity of the mixer (M) may be critical depending on the intensity of the crosstalk since the modulated interferers are not filtered before the mixing process. In this example, the selection of the signal of interest from others sources of interferences are directly driven by the performances in term of selectivity of the integrated filter. The more selective the filter is, the more the effect of crosstalk is prevented. However, selective filters often require a size of the driving circuit Drcirc which may not be compatible with small pixel sizes. Therefore, a proposed solution consists in using digital encoding - and more particularly Direct sequence Code Division Multiple Access (CDMA) in addition or as an alternative to frequency modulation to improve crosstalk rejection capability. These solutions are discussed with reference to figures 7a to 12c.

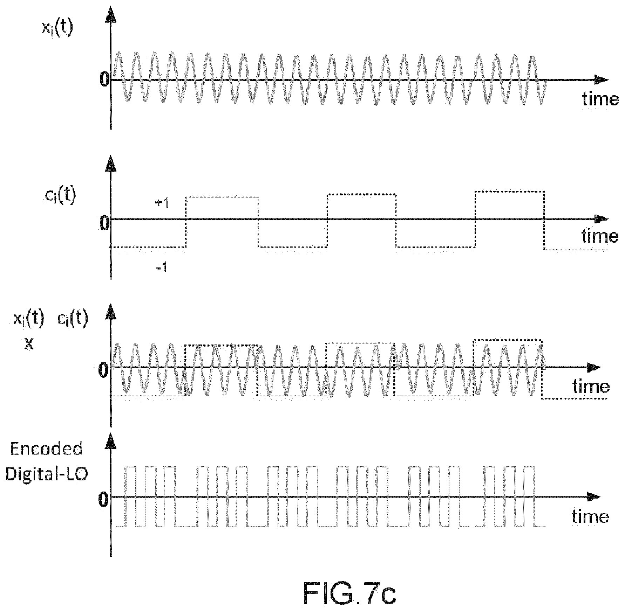

Direct sequence Code Division Multiple Access (DS-CDMA) is a digital cellular technology used in various radiomobile communication means. DS-CDMA is an example of multiple accesses, where several transmitters may send information simultaneously over a single communication channel. The message of each transmitter is then modulated by longer code sequences. Each code sequence is unique and provides a specific signature for a given transmitter. From the receiver side, due to the advantageous auto- and cross-correlation characteristics of the code sequence, the receiver is able to recover the information of a given transmitter by correlating the received signal with the dedicated code sequence allocated to a given transmitter. In a multi-functional display, unlike in radiomobile communication, it is not intended to send any bits. However orthogonality of DS-CDMA code properties is used by modulating a given single carrier frequency fmi with a code sequence to exploit the unicity of signature. Fig 7a illustrates the principle of modulation and code sequence of multiple light sources. Figure 7b provides the spectrum of the signal. Figure 7c illustrates an example of chronogram of an encoded and modulated light source signal. In the present invention, code sequence properties are used to create a unique signature of a given light source, e.g. the light source $LS_i$, decorrelated from the other light sources LS1, ..., LSn. As a result, a given photodetector PD focusing on a specific light source LS1 of interest is able to recover useful signals from the other light sources LS1, ..., LSn without any ambiguity. This signature enables reducing the impact of crosstalk. Contrary to radiocommunication applications, in the present invention, the light source $LS_i$ does not send any information relating to a digital bit stream. Additionally, DS-CDMA solution has been investigated for optical communication. For the optical DS-CDMA applications, the use of bipolar code sequences present more difficulties since optical fibers do not conserve the signal phase. Additionally, modulation of phase light requires coherent light (such as lasers). In contrast, in the present invention, a frequency modulated electrical subcarrier is encoded, instead of an optical carrier. The code sequence is applied on a DC component or on the frequency subcarrier modulating the light source intensity, but not on the digital information stream.

In different embodiments of the invention exploiting DS-CDMA, the driving circuit Drcirc is configured for supplying the light sources with and encoded driving signals DrS and the processing circuit PCirc is configured for decoding the detection signal in order to extract a contribution to the detection signal. In particular, the light from each source is encoded with a polarity code sequence. One counter-intuitive element of the solution consists in modulating the signal with a bipolar code sequence controlling the phase although the optical receiver is said to be non-coherent. The different code sequences are orthogonal or quasi-orthogonal (i.e. their intercorrelation is equal to zero or almost zero). In the preferred embodiment, the sequence c(t) is bipolar +1/-1 and multiplies the modulated signal x(t) which modulates the light intensity (direct encoding of the subcarrier). In an example, a light source LSi is modulated at a frequency fmi and encoded using a direct-sequence DS-CDMA. A DS-CDMA modulated and encoded signal is a sinusoidal signal xi(t) which is directly multiplied by the $i^{th}$ code sequence ci(t) leading to the source signal si(t).

Related code sequences, correlation properties drives system performances. More precisely, high autocorrelation peak and low cross-correlation peaks provide a wide dynamic range and so on provide large crosstalk mitigation solution. Ideally, code sequences should be mutually orthogonal. The characteristic cross-correlation properties of Gold sequences make them useful when multiple devices are considered because Gold sequences highlight better periodic cross-correlation than simple pseudo-noise code sequences for example. In particular, the chronograms on figure7c represent the signal of the subcarrier x(t), the code sequence c(t)constituted by "chips" (i.e. pulses) taking the values +1 and -1, the encoded subcarrier signal s(t) obtained by multiplying the carrier signal x(t) by the code sequence c(t) and an encoded local oscillator (LO) signal suitable to be used for decoding.

The Gold sequences are defined using a specified pair of code sequences u and v, called a preferred pair. The u and v pair of code sequences has an overall periodicity L = 2n - 1, where n is the degree of the generator polynomials. The set G(u, v) of Gold sequences is defined by :

$$G(u,v) = \{u, v, u \oplus v, u \oplus Tv, u \oplus T^2 v, \ldots, u \oplus T^{N-1} v\}$$

where T represents the operator that shifts vectors cyclically to the left by one place, and $\oplus$ represents addition modulo 2. G(u,v) contains L + 2 code sequences of period P.

Gold codes are not orthogonal but near orthogonal, implying that the cross correlations are not zero but have small values. Gold sequences have the property that the cross-correlation between any two, or between shifted versions of them, takes on one of three values:

$$t(n) = \begin{cases} 1 + 2^{\frac{n+1}{2}} & \text{if } n \text{ even} \\ 1 + 2^{\frac{n+2}{2}} & \text{if } n \text{ odd} \end{cases}$$

The code autocorrelation is equal to the code length L. The ratio between the maximum of the autocorrelation and the cross correlation determines the cross talk reduction ratio. Since the autocorrelation peak is equal to the code length, the normalized cross-correlation leads directly to the cross talk reduction ratio ΔXtalk.

Typically, a polynomial order n=10 is chosen with a chip rate of 1.023 MHz providing a code length of 1023 and a periodicity of 1ms. The chip rate needs to be comprised in the bandwidth of the LED and the photodetector

In an example, the driving circuit Drcirc may be configured for supplying the incoherent light sources LS1, LSi, LSn with respective driving signals whose AC components are encoded with different orthogonal or near-orthogonal binary codes, and the processing circuit PCirc, or each processing circuit PCirc comprises: a local code generator CG1, CGi, ..., CGn configured for generating a local binary code chosen among the orthogonal or near-orthogonal binary codes; a mixer (M) configured for mixing the AC components, or down-converted versions thereof, with the local binary code ; and an integrator for integrating an output signal of the mixer (M). In this case, the processing circuit PCirc is configured for decoding the encoded detection signal.

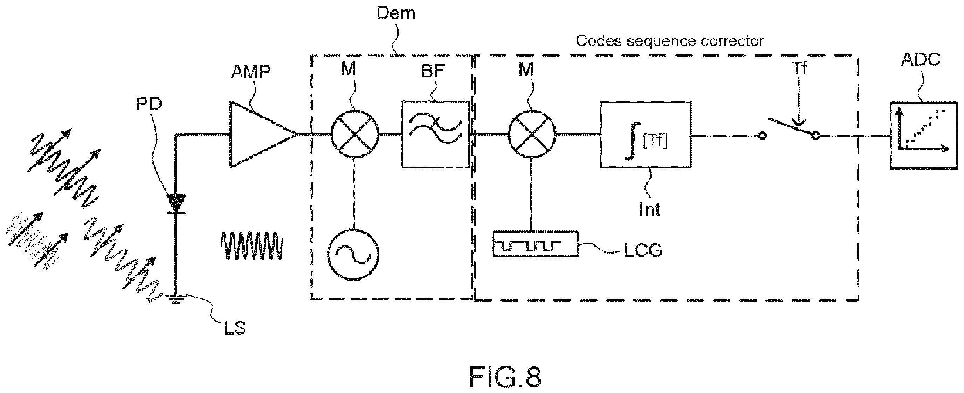

Figure 8 illustrates an example of a processing circuit PCirc for decoding the detection signal using a code sequence correlator. This function is built upon a code sequence generator matched to the source of interest, a mixer M mixing the incoming signal with the locally generated code sequence. Further, integration is performed over the entire code sequence duration, defined on a time frame Tf. Then, the signal is converted in the digital domain by an analog digital converter. Therefore, the measured DC level only corresponds to the light signal coming from the source LSi while signals from other sources LS1 ... LSn are cancelled out due to inter-correlation properties. In particular, in order to perform signal processing achieving frequency selection and code sequence decoding, an analog-oriented integrated circuit architecture may be envisioned as reported on figure 8. In an example of an embodiment, a trans-impedance amplifier is directly connected to the photodetector PD to increase the current level with low noise design constraints. The signal is then fed to the input of a mixer (for example, a Gilbert Cell), and multiplied with a reference local oscillator LO. The frequency synchronization between the local oscillator LO and the modulated frequency is critical to recover relevant signal. Therefore, the local oscillator signal may be fed into a receiver directly from the light source $LS_i$. Alternatively, if direct connection between a transmitter and a receiver is not possible because of clock signal rooting issues for instance, a phase Locked Loop system or any clock signal recovery may be implemented to regenerate the local oscillator signal used at the photodetection side. After mixing, a low pass filtered is used to filter out irrelevant frequencies. For example, a typical analog filter may be used, such as a feedback Operational Transconductance Amplifier. Further, signal decoding is performed using a locally code sequence generator LCG tailored to the source $LS_i$ of interest and a mixer M mixing this code and the incoming signal. The integration process at the chip rate performs the correlation. The circuit may operate at chip rate to take a sample over the capacitance and then integrate the charge into an overall integration capacitance during a predetermined period. This process performs the correlation product between an incoming signal and the code sequence. Finally, the charge is then reset at the frame rate after digital conversion in the digital domain performed by an analog to digital converter.

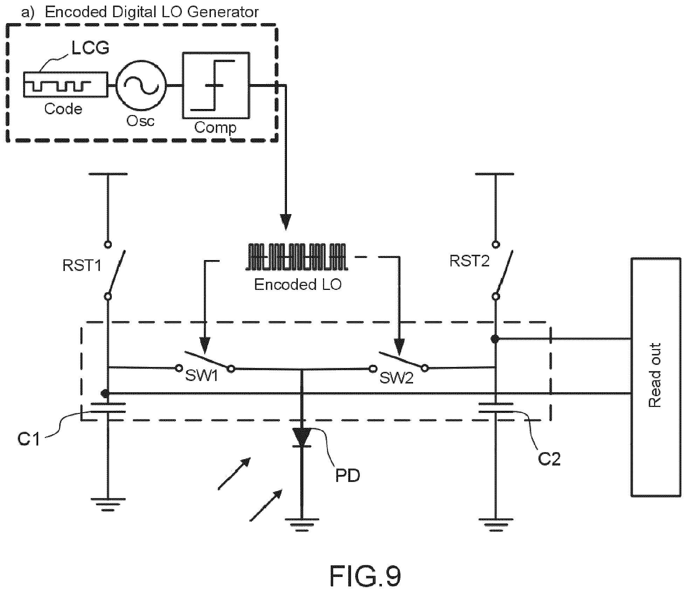

In another embodiment of the invention, the driving circuit DrCirc may be configured for supplying the incoherent light sources LS1, LSi, ..., LSn with respective driving signals DrS whose AC components are encoded with different orthogonal or near-orthogonal binary codes, and wherein the processing circuit PCirc or each processing circuit PCirc comprises: an encoded local oscillator, configured for generating a local oscillator signal encoded by a local binary code chosen among the orthogonal or near-orthogonal binary codes; a first and a second capacitor; a switching system configured for directing the detection signal towards the first or the second capacitor depending on a polarity of the encoded local oscillator signal; and a readout system configured for detecting a voltage difference between the first and the second capacitor. Figure 9 illustrates an example of a processing circuit PCirc for both demodulating and decoding the detection signal. This example represents an analog solution based on switched capacitor solution. In this example, a switch capacitor circuit implementation is used. This configuration is inspired from photonic mixer devices. Photonic mixer devices consist of a photodiode connected to multiple charge storage capacitors C1, C2, (two in the example illustrated in Figure 9) collecting alternatively charges depending on the position of the control switches. The switches are driven with a dynamic signal coming from the encoded digital local oscillator. The local oscillator is the product between a digital local oscillator running at a frequency fmi and the code sequence. Preferably, a local oscillator frequency is selected as a multiple of the chip rate so that the integer cycles of the local oscillator falls into a chip period Tchip. The present example has a two tap lock-in structure using monolithic capacitors as charge storage units. Along the time frame Tf, representing the addition of all the chip periods Tchidp, charges generated by the photodiode within the chip period Tchip, are selectively transferred to either of the tap blocks through the switches SW1, SW2 that are controlled by the binary encoded digital local oscillator. Thus, in this architecture, the functions of demodulator and decoder are combined. A classical readout circuit enables to extract signal before analog to Digital conversion.

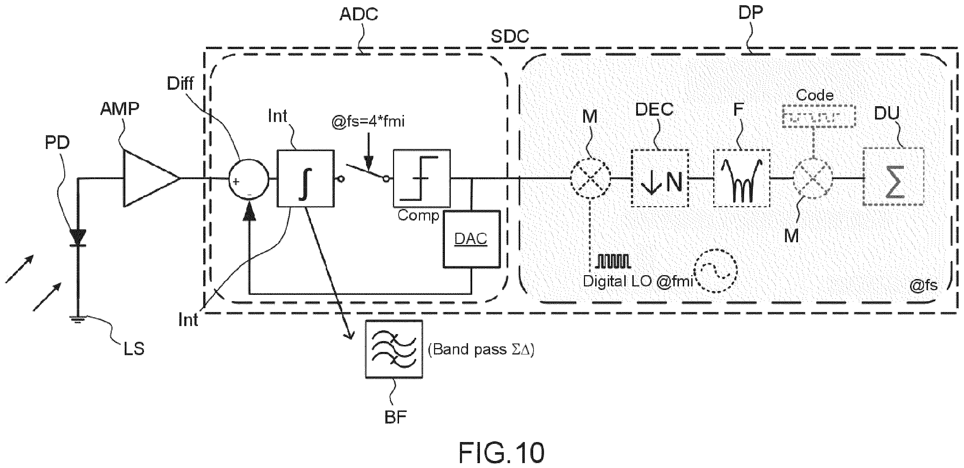

Figure 10 illustrates a third example of a processing circuit PCirc for both demodulating and decoding the detection signal. This example represents a digital solution in the sense that signal is digitalize early in the signal processing chain and most of signal treatment is performed in the digital domain. In this example, the processing circuit PCirc, or each processing circuit PCirc, comprises: an analog-to-digital converter configured for digitizing the detection signal; and a digital signal processor configured for extracting the contribution to the detection signal. For example, the analog-to-digital converter may be advantageously a sigma-delta converter. Alternatively to the analog solution presented above, digital implementation may also be used to perform signal processing after photodetection. Main benefits of digital implementation enables leveraging advanced technology node scaling in order to reduce the overall chip size. In particular, in this example, a sigma-delta converter used for example in R. Schreier and G. C. Temes, "Understanding delta-sigma data converters", vol. 74: IEEE press Piscataway, NJ, 2005 is used in order to shape the noise to limit its influence and to implement signal down-conversion. The sigma-delta converter takes advantage of the speed of analog circuits, along with the robustness of digital circuits. They also reduce the amount of analog circuitry used in the converter. As illustrated on Figure 10, the sigma-delta converter SDC consists of an oversampling modulator followed by a digital decimation filter, together producing a high-resolution data-stream output. In particular, the sigma-delta converter SDC comprises two sections, the analog to digital conversion ADC and the digital processing DP. The analog to digital conversion section comprises a differentiator Diff, an integrator Int, a comparator Comp and analog to digital converter DAC. The modulator converts the analog input signal to a high-speed signal, single-bit at the sampling rate fs of the comparator Comp. This section encodes an analog signal using highfrequency delta-sigma modulation and then applies a digital filter to demodulate it to a highbit digital output at a lower sampling-frequency. The digital processing section comprises a mixer M, a decimation unit Dec, a filter F, and a decoding unit DU. At the output, the stream of 1-bit digital values, representing the input analog voltage of the input, is then decimated ($\downarrow$N) and digitally filtered. In a typical first-order modulator, the input signal is sent to a difference block where the feedback signal is being subtracted from it. The resulting signal is sent to a first order integrator and the comparator acts on the output of the integrator.

In an example, a band-pass sigma-delta converter is implemented. The bandpass conversion is more efficient than converting the entire frequency band between [0-fs] since no power is wasted on the accurate conversion of unwanted signal out of the band of interest. In a band-pass sigma-delta analog to digital converter, the low-pass filter LF following the differentiator is replaced by a band-pass filter BP and resonators are used instead of integrators. In the present example, the central frequency of the band-pass sigma-delta converter is aligned to the modulated frequency, and its bandwidth is defined to the chip rate fchip. Additionally, the sigma-delta converter sampling rate fs, may be selected to be four times the modulated frequency so that the mixing operation required for signal downconversion is simple and may be accomplished using simple digital logic. Typically, a modulated frequency fmi=4.092 MHz is associated to a 16.368 MHz sampling rate.

In the analogue solution discussed above and illustrated in Figure 9, the switches may suffer from some limitation such as charge injection and additional thermal noise responsible for signal to noise ratio degradation. To prevent the addition of noise due to such switches, a specific device may be preferably used: a Current-Assisted Photonic Demodulator CAPD which is at the core of the preferred embodiment. The Current Assisted Photonic Demodulator CAPD encompasses two junctions and two gates that generate two depletion areas. These depletion areas and their electric field allow the electrons generated by the photoelectric effect to flow to the collecting photodiodes D1 and/or D2 according to the voltages applied onto the gates G1 and G2. Hence, the Current-Assisted Photonic Demodulator CAPD may be equivalent to an analogue mixer or to an analogue switch. In particular, the Current-Assisted Photonic Demodulator CAPD behaves as a switch when the voltage applied to G1 (respectively G2) is zero and the voltage applied to G2 (respectively G1) is positive. Since there is no extra resistive channel, the main advantage of using a Current-Assisted Photonic Demodulator PD is to avoid the introduction of extra noise with respect to a single photodiode. In other words, a Current-Assisted Photonic Demodulator CAPD acts as a photodiode associated to a noise-free switch.

The capacitances of the reversed biased junctions and may be used as storage nodes for the charge Q1 stored in the capacitor C1 along the activation of the switch SW1 and the charge Q2 stored in the capacitor C2 along the activation of the switch SW2. However, capacitances depends non-linearly of their reverse voltage, and the value, hence the conversion gain, is bound to the design of Current-Assisted Photonic Demodulator device itself. To alleviate this issue, a capacitive trans-impedance amplifier (CTIA) may be used to store Q1 (Q2) in dedicated capacitors. In practical cases, the photonic flow comprises a DC component in addition to the modulated signal. The DC component needs to be removed to maximize the amplitude of the useful signal.

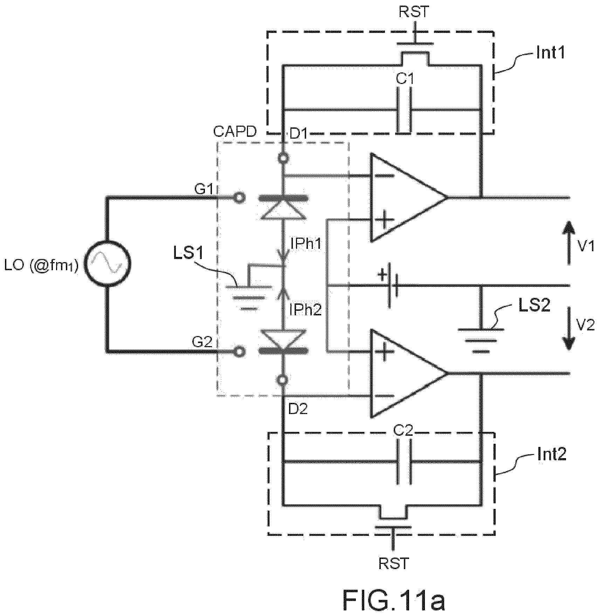

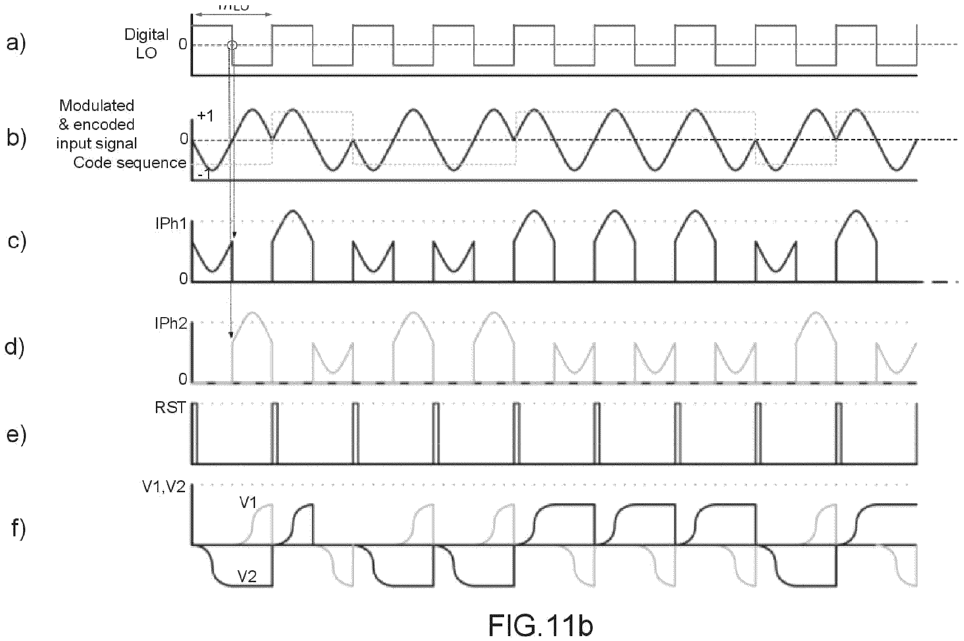

An example of a differential structure which may be implemented is illustrated in Figure 11a. Additionally, Figure 11b shows a chronogram of relevant signals.

In this example, the photodetector PD is a Current-Assisted Photonic Demodulator having a first and a second collecting junction and a first and a second gate. Additionally, the processing signal comprises: a local oscillator configured for generating a local oscillator signal and applying it to the first and the second gates in such a way as to drive them in phase opposition; a first and second integrators Int1, Int2dfg achieved by two capacitors configured for integrating photocurrents flowing from the first and the second collecting junctions, respectively ; and a first and a second resetting switches configured for resetting the first and the second integrator, respectively, at la frequency of the local oscillator signal.

In particular, in this example, the gate of the Current-Assisted Photonic Demodulator is driven by a digital local oscillator running at a modulation frequency. The modulated and encoded light signal is converted into a current that flows respectively on photodiode D1 for positive alternation of the local oscillator to generate the current Iph1 (when the clock is high) and photodiode D2 for negative ones to generate the current IPh2 (when the clock is low). The current is then integrated over the capacitance C1, C2 to form the output voltage V1, V2 which represent, respectively the integration of

the current Iph1, Iph2. A switch is put in parallel to the capacitance to reset the voltage at a given rate. The chronographs of the different signals are represented in Figure 11b, in which a) is the local oscillator, b) is the modulated input signal, b) is the current Iph1 when the clock is high, c) is the current Iph2 when the clock is low, c) is the reset signal and d) is the output voltage V1, V2.

In this example, the Current-Assisted Photonic Demodulator performs a homodyne downconversion and demodulation process since the input photo-converted light signal modulated at the modulated frequency is mixed with the periodic local oscillator control signal applied to Current-Assisted Photonic Demodulator gate running at the same frequency.

A modified version of the Current-Assisted Photonic Demodulator illustrated in Figure 11a may be used to perform the demodulation as well as the decoding. In particular, the decoding may consist of performing the product between the differential signal (V1-V2) with the code sequence.

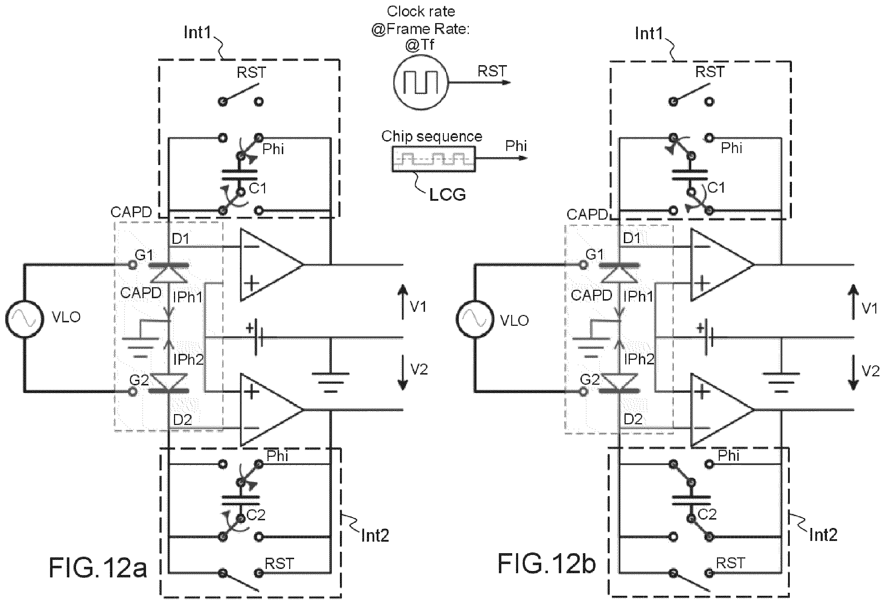

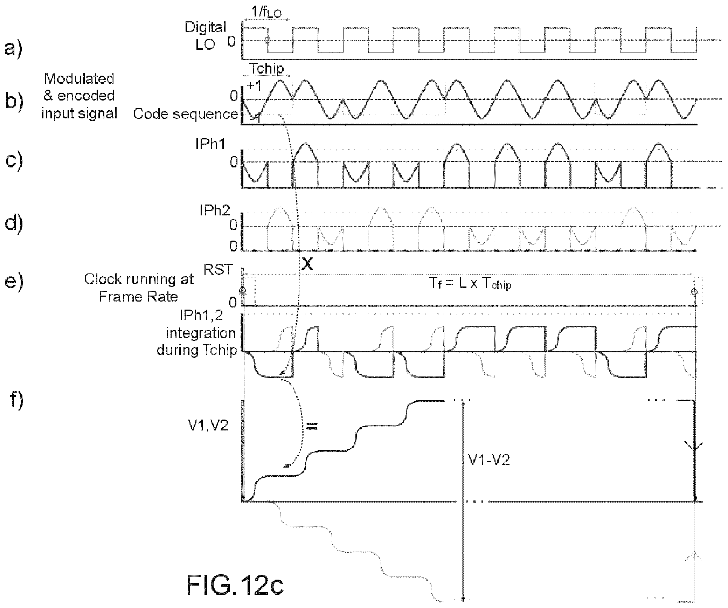

Therefore, another example uses additional switches for controlling the polarity of the capacitance, as illustrated in Figures 12a and 12b.

In this example,; the photodetector PD is a Current-Assisted Photonic Demodulator having a first and a second collecting junction and a first and a second gate; and the processing signal comprises: a local code generator LCG configured for generating a local binary code chosen among the orthogonal or near-orthogonal binary codes; a local oscillator configured for generating a local oscillator signal and applying it to the first and the second gates in such a way as to drive them in phase opposition; a first and second integrators Int1, Int2, each comprising an integrating capacitor C1, C2, configured for integrating photocurrents flowing from the first and the second collecting junctions, respectively ; and a switching system driven by the local binary code, configured for inverting a polarity of connection of the integrating capacitors.

In this example, the reset control signal RST is synchronized with the start of the time frame. It has the same period Tf (typically 1ms). The RST signal drives the switch controlling charge integration on the capacitance C1 (respectively capacitance C2) coming from the current I1 (respectively curretI2) over the entire time frame. The time frame lasts L chips period (typically L=1023). The polarity of the capacitance connection on the operational amplifier is set according to the chip polarity itself (-/+1). Figures 12a et 12b shows configuration depending on chip polarity: when the chip equals '1', the capacitors C1 and C2 integrate respectively Iph1 and Iph2 (Figure 12a). When the chip equals '-1', the capacitors C1 and C2 integrate respectively the current -Iph1 and the current -Iph2 (Figure 12b).

Since the overall integration time is equal to the duration of the frame Tf, i.e. the capacitors are not reset, the differential voltage at the end of the integration process corresponds to the sum along the frame period Tf, of the integral over one chip duration of Iph1,2 weighted by the code sequence. Figure 12c illustrates chronogram of relevant signals: a) the signal of the local oscillator, b) is the modulated and encoded input signal, c) is the current Iph1 when the clock is high, d) is the current Iph2 when the clock is low, e) is the reset signal and f) is the integration of the current Iph1 and Iph2 over the chip duration. This operation performs mathematical scalar product between the code sequence and the integral of the current over chip duration.

Simulation results are now presented to illustrate the features of the optoelectronic system OS described above. The conditions of the simulations are as follows:
Firstly, a given incident light source is modulated in time with a direct sequence encoder. The encoder uses an orthogonal gold code sequence corresponding to a frame duration of 1 ms (respectively a frequency of 1 kHz). The code sequence is formed by 1023 chips running at 1023 kHz. The polynomial generator of the gold encoder uses the n=11th order polynomial providing 2047 (2n) pairs of sequences period and Two source sequences are selected among all the possible code sequences. The signal is modulated and upconverted on a carrier frequency fmi respectively at fm1=2046 kHz for the source LS1 and fm2=4092 kHz for the source LS2, corresponding to disjoint carriers. Each source is supposed to illuminate a respective objects O1 and O2 whose optical properties are varying respectively at different frequencies respectively fs1=100 Hz (for O1) and fs2=200Hz (for O2). In real-life applications, these frequencies might be unknown and it might be desirable to measure themLight is then reflected back to photodetectors PD1 and PD2 after some attenuation.. Because of crosstalk, the photodetector PD1 receives a useful light signal reflected by object O1, but also a parasitic signal reflected from object O2, which may alter the sensitivity to the measurement of the signal coming from object O1, and vice versa. In the simulation, crosstalk is considered to be symmetrical, which means that the effect of light reflected by object O2 on photodetector PD1 2 is equal to the effect of light reflected by object O1 on photodetector PD2

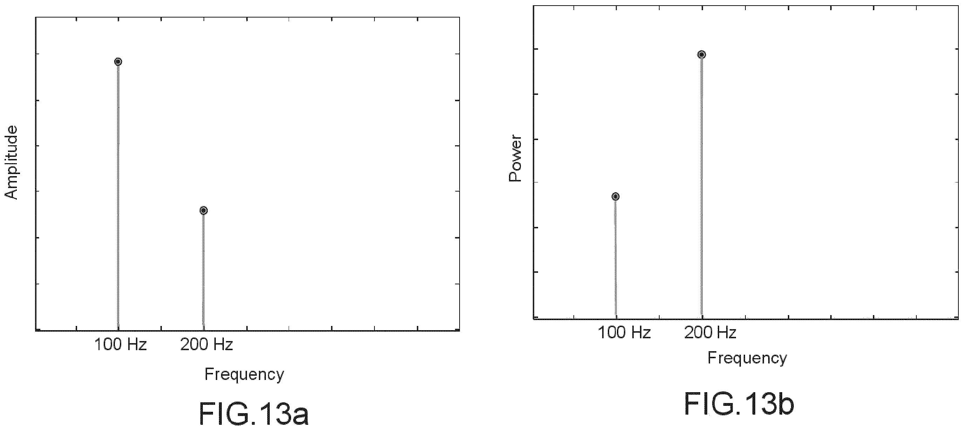

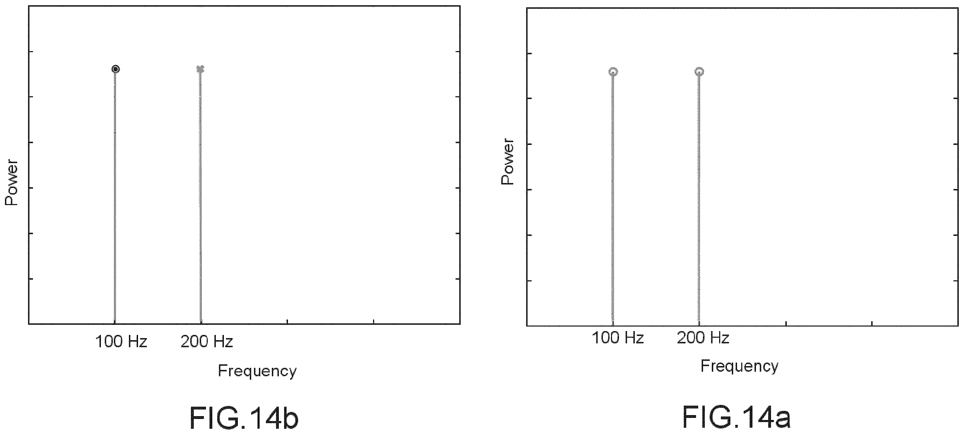

Figures 13a and 13b represents spectra of a baseband demodulated signal of a first and second photodetector. In this configuration, both frequency modulation and encoding are used. Figure 13a shows the spectrum of the lowermost time domain signal, i.e. the received demodulated signal at the output of a first photodetector PD1.The spectrum shows an expected peak value at 100 Hz corresponding to the signal of interest. However a remaining peak occurs at 200 Hz coming from a second light source signal. This is due to the crosstalk. However it is important to notice that peak value is significantly lower than the main peak. This value corresponds to the crosstalk rejection capability. Figure 13b represents the output of a second photodetector PD2 focused on the analysis of the second light source signal. A frequency peak occurs at 200 Hz corresponding to the second light source while remaining parasitics signal coming from a first light source at 100 Hz is significantly lower. These results should be compared with the examples of figure 14a and 14b wherein neither modulation nor encoding is applied. Since the both photodetectors receive the same light signal and the processing are undistinguishable from one to the other, as a result, the output signal from the photodetectors is the same. This is shown in respectively in Figure 14a for a first photodetector PD1 and and Figure 14b for a second photodetector PD2. The useful signals coming from a first light source and reflected by a first object whose optical properties are varying at 100 Hz and parasitic light coming from a second light source and reflected by a second object whose optical properties are varying at 200 Hz are superimposed. In this configuration, the crosstalk is maximal, hence making impossible to identify the origin of the light signals for any of the photodetector. The light intensity at the frequencies fs1 and fs2 are strictly identical. This means that neither of the photodetectors PD1 nor PD2 is able to discriminate the origin of the light, indicating that the photodetectors suffer from crosstalk.

On contrary, rejection reported on figure13 values show clearly the interest of modulation and encoding technics proposed in the current invention in order to mitigate the effect of crosstalk.

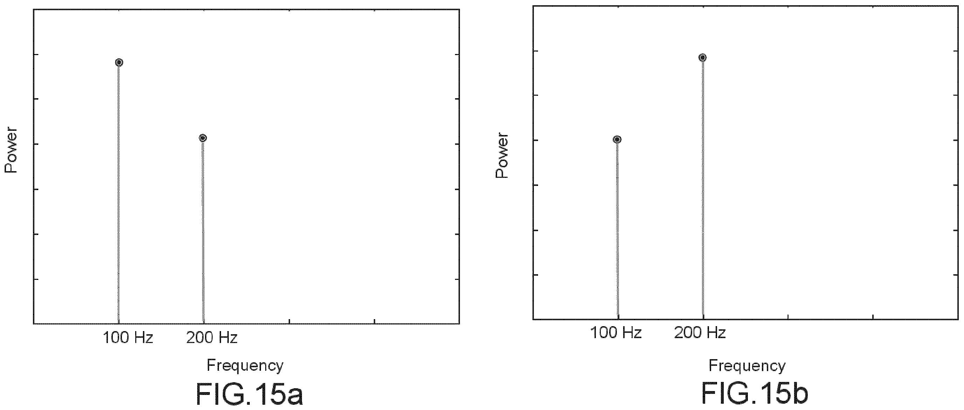

In another example, the performance of cross-talk mitigation without any distinct frequency modulation is implemented. The results are shown in Figures 15a and 15b. As a result, in this configuration, crosstalk mitigation relies only on the encoding method. This solution may be interesting for the sake of hardware implementation simplification or power consumption reduction. In this configuration the spectrum of each source overlaps at the unique modulation frequency, set to 3.069 MHz. The crosstalk rejection is lower than with the former case but still better than without any modulation nor encoding. This value is close to the expected theoretical value corresponding to the inter-correlation product between sequence 1 and sequence 2.

In another example, the cross-talk mitigation is implemented without any frequency modulation of the light intensity. The code sequence is directly applied in a base-band to encode the light intensity around the DC value. The used code is bipolar, meaning that the instantaneous polarization is varying +/- around the DC values.

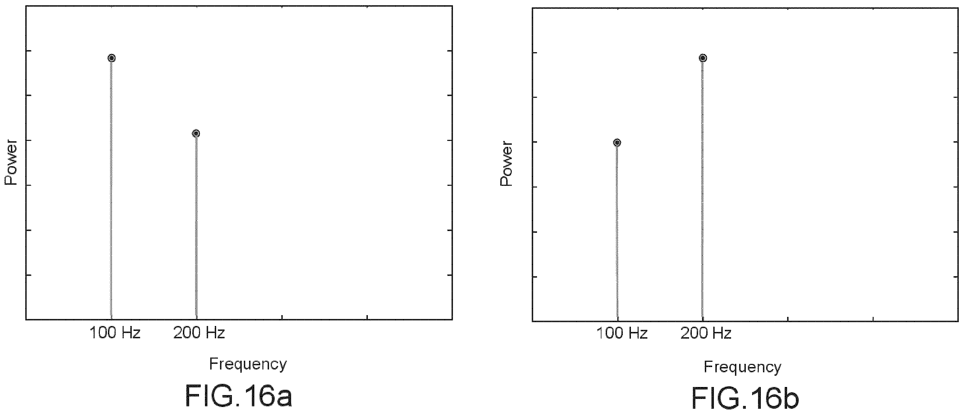

The crosstalk rejection reported on Figure 16a and Figure 16b reaches the same performances than with case reported on figure15 a b.

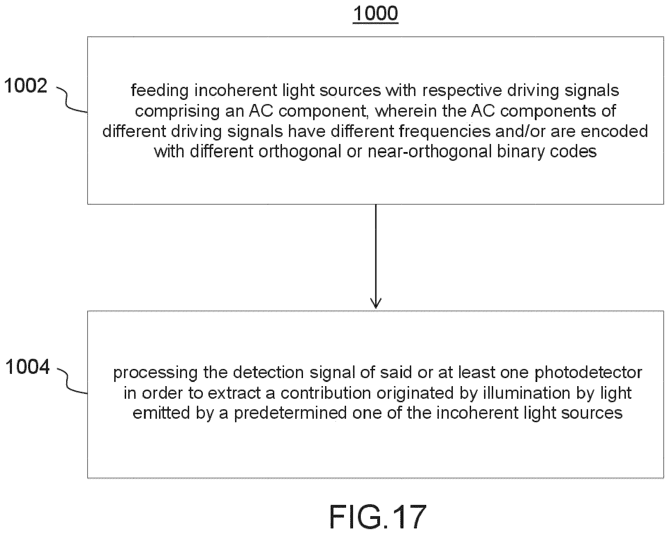

The invention also concerns a method 1000 of operating an optoelectronic system OS. The operating an optoelectronic system OS operated by the method may be the optoelectronic system OS described above. Figure 17 is a flow diagram depicting a method 1000 of operating an optoelectronic system OS.

At block 1002, the method 1000 comprises feeding the incoherent light sources with respective driving signals DrS comprising an AC component, wherein the AC components of different driving signals DrS have different frequencies and/or are encoded with different orthogonal or near-orthogonal binary codes.

At block 1004, the method 1000 comprises processing the detection signal of the or at least one the photodetector PD in order to extract a contribution originated by illumination by light emitted by a predetermined one of the incoherent light sources.

The method 1000 also comprises receiving the light reflected by an object O.

While the invention has been illustrated and described in detail with the help of a number of preferred embodiments, the invention is not limited to the disclosed examples. Other variations can be deducted by those skilled in the art without leaving the scope of protection of the claimed invention. For example, it has to be understood that the invention may use only frequency modulation or only encoding, or a combination of both in order to overcome the effect of crosstalk. Additionally, the system has been described with a limited number of light sources and photodetectors. However, the system may comprise a large number of light sources for example and/or photodetectors. Further, in a same device, pixels may comprise RGB sources only and other pixels may comprise RGB and light sources. Similarly, some pixels may comprise one or more photodetector while others may not comprise any photodetector. Further, other types of CDMAs may be used, such as FH-CDMA (Frequency Hopping-CDMA).

**Claims**

1. An optoelectronic system (OS) comprising:

- a plurality of light sources (LS1, LSi, LSn);
- at least one photodetector (PD) configured for generating a detection signal by performing incoherent detection of light emitted by at least one of said light sources;
- a driving circuit (Drcirc) configured for supplying said light sources with respective driving signals (DrS);
- at least one processing circuit (PCirc) associated to said or each said photodetector for processing said detection signal;

**characterized in that**:

- said driving circuit is configured for supplying said light sources with respective driving signals comprising an AC component, wherein the AC components of different driving signals have different frequencies and/or are encoded with different orthogonal or near-orthogonal binary codes; and **in that**
- said or each said processing circuit is configured for demodulating and/or decoding the detection signal in order to extract a contribution to said detection signal originated by illumination of the photodetector by light emitted by a predetermined one of said light sources.

2. The optoelectronic system of claim 1, wherein at least some of the light sources are incoherent light sources.

3. The optoelectronic system of claim 1, wherein said or at least one said photodetector is configured for receiving light emitted by at least one of said light sources and reflected by an object (O).

4. The optoelectronic system of any one of the preceding claims, wherein said or each said photodetector is configured for being primarily illuminated by light generated by said predetermined light source, while also receiving other unwanted parasitics light generated by at least one other light source of said plurality of incoherent light sources.

5. The optoelectronic system of any one of the preceding claims wherein said optoelectronic system is part of a multifunctional display comprising a plurality of pixels (Pix), at least some of the pixel comprising one said light sources and at least one pixel also comprising said or one said photodetector, the processing circuit associated to said or each said photodetector being configured for extracting the contribution to the detection signal originated by illumination of the photodetector by light emitted by the light source belonging to the same pixel as the photodetector.

6. The optoelectronic system of any one of the preceding claims wherein each said driving signals also have a DC component superimposed to said AC component.

7. The optoelectronic system of any one of the preceding claims wherein said driving circuit is configured for supplying said light sources with respective driving signals which have AC components at different frequencies and wherein said or each said processing circuit comprises:

- a local oscillator (LO) configured for generating a local oscillator signal at one of said frequencies; and
- a demodulator (Dem) configured for receiving as inputs said detector signal and said local oscillator signal and for providing as an output said contribution to said detection signal.

8. The optoelectronic system of claim 7 wherein said demodulator comprises:

- a band-pass filter (BP) having a pass-band centered on the frequency of the AC component of the driving signal fed to a predetermined one of said light sources; and
- a mixer (M) configured for down-converting said AC by mixing it with the local oscillator signal in order to convert it to baseband.

9. The optoelectronic system of claim 7 wherein said demodulator comprises:

- a mixer (M) configuring for down-converting an AC component of the detection signal by mixing it with the local oscillator signal; and
- a low-pass filter (LF), configured for filtering said down-converted AC-component of the detection signal.

10. The optoelectronic system of any one of the preceding claims wherein said driving circuit is configured for supplying said light sources with respective driving signals whose AC components are encoded with different orthogonal or near-orthogonal binary codes, and wherein said or each said processing circuit comprises:

- a local code generator (CG) configured for generating a local binary code chosen among said orthogonal or near-orthogonal binary codes;
- a mixer (M) configured for mixing the said AC components, or down-converted versions thereof, with the local binary code; and
- an integrator for integrating an output signal of the mixer.

11. The optoelectronic system of any one of claims 1 to 7 wherein said driving circuit is configured for supplying said light sources with respective driving signals whose AC components are encoded with different orthogonal or near-orthogonal binary codes, and wherein said or each said processing circuit comprises:

- an encoded local oscillator, configured for generating a local oscillator signal encoded by a local binary code chosen among said orthogonal or near-orthogonal binary codes;
- a first and a second capacitor (C1, C2);
- a switching system (SW1, SW2) configured for directing the detection signal towards the first or the second capacitor depending on a polarity of the encoded local oscillator signal; and
- a readout system configured for detecting a voltage difference between the first and the second capacitor.

**13.** The optoelectronic system of any one of the preceding claims, wherein said or each said processing circuit comprises:

- an analog-to-digital converter (ADC) configured for digitizing the detection signal; and
- a digital signal processor (DP) configured for extracting said contribution to said detection signal.

**14.** The optoelectronic system of claim 13, wherein said analog-to-digital converter is a sigma-delta converter (SDC).

**15.** The optoelectronic system of any one of claims 1 to 6 wherein:

- said driving circuit is configured for supplying said incoherent light sources with respective driving signals which have AC components at different frequencies;
- said photodetector is a Current-Assisted Photonic Demodulator - CAPD - having a first and a second collecting junction and a first and a second gate; and
- said processing signal comprises:

  - a local oscillator (LO) configured for generating a local oscillator signal and applying it to the first and the second gates in such a way as to drive them in phase opposition;
  - a first and second integrators (Int1, Int2) configured for integrating photocurrents flowing from the first and the second collecting junctions, respectively ; and
  - a first and a second resetting switches (RST) configured for resetting the first and the second integrator, respectively, at a frequency of the local oscillator signal.

**16.** The optoelectronic system of any one of claims 1 to 6 wherein:

- said driving circuit is configured for supplying said light sources with respective driving signals whose AC components are encoded with different orthogonal or near-orthogonal binary codes;
- said photodetector is a Current-Assisted Photonic Demodulator- CAPD - having a first and a second collecting junction and a first and a second gate; and
- said driving signal of the CAPD comprises:

  - a local code generator (LCG) configured for generating a local binary code chosen among said orthogonal or near-orthogonal binary codes;
  - a local oscillator (LO) configured for generating a local oscillator signal and applying it to the first and the second gates in such a way as to drive them in phase opposition;
  - a first and second integrators (Int1, Int2), each comprising an integrating capacitor, configured for integrating photocurrents flowing from the first and the second collecting junctions, respectively ; and
  - a switching system (SW1, SW2) driven by said local binary code, configured for inverting a polarity of connection of said integrating capacitors.

**17.** A method (1000) of operating an optoelectronic system comprising:

- a plurality of light sources (LS1, LSi, LSn);
- at least one photodetector (PD) configured for generating a detection signal by performing incoherent detection of light emitted by at least one of said incoherent light sources;

the method being **characterized by** feeding said light sources with respective driving signals comprising an AC component, wherein the AC components of different driving signals have different frequencies and/or are encoded with different orthogonal or near-orthogonal binary codes, and by processing the detection signal of said or at least one said photodetector in order to extract a contribution originated by illumination by light emitted by a predetermined one of said light sources.

**18.** The method of claim 17 wherein at least some of the light sources are incoherent light sources.

**19.** The method according to any one of claims 17 and 18, wherein said or at least one said photodetector is configured for receiving light emitted by at least one of said light sources and reflected reflected by an object (O).

FIG.1

OS

DrS

LS1

DSCirc

PD

PCirc

O

DrS

LS2

FIG.2

Pix

R

G

B

LS1

OS

FIG.3

FIG.4

Dem

PD   AMP   BF   M   ADC

LO

LS

**FIG.5a**

EP 4 664 151 A1

Photodetector Input

0          fm$_1$   fm$_i$      fm$_n$   frequency

Filter output

0          fm$_1$   fm$_i$      fm$_n$   frequency

Mixer output

0   fm$_n$ - fm$_i$              frequency

- (fm$_1$ - fm$_i$)

**FIG.5b**

FIG.6a

FIG.6b

FIG.7b

FIG.7a

EP 4 664 151 A1

$x_i(t)$

$c_i(t)$

+1

0

−1

time

time

$x_i(t)$ $c_i(t)$
X

0

time

Encoded
Digital-LO

0

time

FIG.7c

FIG.8

a) Encoded Digital LO Generator

LCG

Code    Osc    Comp

RST1

Encoded LO

RST2

SW1    SW2

C1    C2

PD

Read out

FIG.9

FIG.10

EP 4 664 151 A1

FIG.11a

FIG.11b

FIG.12a

FIG.12b

FIG.12c

FIG.13a

FIG.13b

EP 4 664 151 A1

Power

100 Hz    200 Hz

Frequency

FIG.14b

Power

100 Hz    200 Hz

Frequency

FIG.14a

FIG.15b

FIG.15a

FIG.16a

FIG.16b

EP 4 664 151 A1

**1000**

**1002** — feeding incoherent light sources with respective driving signals comprising an AC component, wherein the AC components of different driving signals have different frequencies and/or are encoded with different orthogonal or near-orthogonal binary codes

**1004** — processing the detection signal of said or at least one photodetector in order to extract a contribution originated by illumination by light emitted by a predetermined one of the incoherent light sources

FIG.17

Europäisches
Patentamt

European
Patent Office

Office européen
des brevets

## EUROPEAN SEARCH REPORT

**Application Number**

EP 24 30 5913

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 872 778 B2 (SMITH EUAN [GB]; RANKOV ALEKSANDRA [GB] ET AL.) 28 October 2014 (2014-10-28) * figures 2,3 * * abstract * * column 6, lines 1-6,25 * * column 7, line 17 - line 20 * ----- | 1-11, 13-19 | INV. G01S7/481 G01S7/4913 G01S7/493 |
| X | US 2019/363792 A1 (TSONEV DOBROSLAV [GB] ET AL) 28 November 2019 (2019-11-28) * figures 1-3 * * abstract * * paragraphs [0043], [0055], [0116], [0159], [0161] * ----- | 1-11, 13-19 | |

**TECHNICAL FIELDS SEARCHED (IPC)**

G01S

The present search report has been drawn up for all claims

| Place of search | Date of completion of the search | Examiner |
|---|---|---|
| Munich | 31 October 2024 | Alberga, Vito |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5913

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2024

| Patent document cited in search report | | Publication date | Patent family member(s) | | Publication date |
|---|---|---|---|---|---|
| US 8872778 | B2 | 28-10-2014 | CN | 102597933 A | 18-07-2012 |
| | | | EP | 2473903 A1 | 11-07-2012 |
| | | | GB | 2473240 A | 09-03-2011 |
| | | | JP | 5690338 B2 | 25-03-2015 |
| | | | JP | 2013504107 A | 04-02-2013 |
| | | | KR | 20120073268 A | 04-07-2012 |
| | | | US | 2012182265 A1 | 19-07-2012 |
| | | | WO | 2011027101 A1 | 10-03-2011 |
| US 2019363792 | A1 | 28-11-2019 | CN | 110192219 A | 30-08-2019 |
| | | | CN | 117173998 A | 05-12-2023 |
| | | | EP | 3542344 A1 | 25-09-2019 |
| | | | GB | 2558792 A | 18-07-2018 |
| | | | GB | 2558793 A | 18-07-2018 |
| | | | US | 2019363792 A1 | 28-11-2019 |
| | | | US | 2022069906 A1 | 03-03-2022 |
| | | | US | 2023246711 A1 | 03-08-2023 |
| | | | WO | 2018130850 A1 | 19-07-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 206058223

**Non-patent literature cited in the description**

- **M. A. B. MISRAN** ; **R. HATTORI,**. Crosstalk and Uniformity Analysis of Fingerprint- On-Display Technology using Pinhole Imaging Technique,. *2022 29th International Workshop on Active-Matrix Flatpanel Displays and Devices (AM-FPD)*, 2022
- **K. J. VAMPOLA,** ; **G. SHAO** ; **W. S. A. RIEUTORT-LOUIS** ; **M. XU** ; **M. CHAPPALLI** ; **A. J. ROUDBARI**. 12-1: Through-OLED Display Ambient Color Sensing,. *SID Symposium Digest of Technical Papers*, 2022, vol. 53, 117-120
- **K. J. VAMPOLA** ; **G. SHAO** ; **W. S. A. RIEUTORT-LOUIS** ; **M. XU** ; **M. CHAPPALLI** ; **A. J. ROUDBARI**. 12-1: Through-OLED Display Ambient Color Sensing. *SID Symposium Digest of Technical Papers*, 2022, vol. 53, 117-120
- **R. SCHREIER** ; **G. C. TEMES**. Understanding delta-sigma data converters. IEEE press Piscataway, 2005, vol. 74